# EUROPEAN PATENT APPLICATION

(11) **EP 2 685 222 A1**
(43) Date of publication of application: **15.01.2014**
(21) Application number: 12757149.5
(22) Date of filing: 01.03.2012
(51) Int. Cl.: G01F 1/05, G01F 15/18

(54) **MULTI-STREAM WATER METER**

(30) Priority: 11.03.2011 UA 2011002856
(71) Applicant: Cherepnin, Oleg Mikhailovych, Kiev 02140 (UA)
(72) Inventor: Cherepnin, Oleg Mikhailovych, Kiev 02140 (UA)
(74) Representative: Michalski Hüttermann & Partner Patentanwälte
(86) International application number: PCT/UA2012/000022
(87) International publication number: WO 2012/125129

(57) **Abstract**

The multi-jet water meter generally relates to instrumentation, and more particularly to devices which are intended for measuring water quantity flowing through the pipeline. The water meter is made of blocks, namely of the measuring and the calculating blocks, that are executed with a possibility of quick replacement in case of necessity.

## Description

The present invention refers to instrumentation, namely to the devices intended for the pipeline water quantity measurement.

By similarity in its technical decision, the best known water meter includes the body, a vane wheel installed on the axis of the basket that has holes for water passage and is magnetically bound to the calculating mechanism.

The disadvantages of above mentioned meter are the technological and organizational complexity of the scheduled checkup for compliance with its technical characteristics, and a low level of maintainability, that results in heavy operational expenses.

For water meter's checkup or maintenance, it should be dismantled at the installation site. Thereafter it must be transported to the specialized territorial body that has the permission to perform calibration and repair. For the time of the calibration and repair, the meter should be replaced by a special insertion, and afterwards the representative of the operational organization must be called to put the meter into operation. The procedure should be repeated after the expiration of the intertesting interval.

In other countries, i.e. Germany, after the expiration of the intertesting interval, a full replacement of the water meter is performed. The term of replacement for hot and cold water meters amounts to five and six years respectively. This process leads to even more operational expenses.

This invention solves the heavy operational expenses problem due to constructional improvement by grouping all meter's parts in two blocks - the measuring and the calculating blocks, each of which is adjusted and tested independently at the manufacturing plant. This particular constructive implementation of meter's elements enables a decrease in operational and maintenance expenditures.

The problem is solved through using a multi-jet meter which includes the pipeline joining body, a vane wheel installed on the axis of the basket that has holes for water passage and is magnetically bound to the calculating mechanism. According to the invention, the basket and the vane wheel (the axis and the magnet) are located inside a separate block (the measuring block) which consists of the upper and lower chambers. The calculating mechanism is also located in a separate block (the calculating block). The measuring block is hermetically installed in and is attached to the pipeline joining body. The calculating block is configured for docking and clamping its body coaxially with the upper chamber of the measuring block and has a mutual rotation possibility. The upper chamber is connected to the lower chamber of the measuring block with a possibility of a gradual rotation against the upper chamber and fixation in the required position. Radials and edges profiled along the radials are located at the interior surface of the lower chamber. The bottom of the lower chamber is executed as a grid. At its internal peripheral part, the lower chamber has two zones with fixing cavities, i.e. triangular. Angular step of the first zone amounts to 1-2 degrees. The angular spacing of the second is several times as large. The external peripheral part of the measuring block's upper chamber has fixing ledges, first of which is cinematically attached to the first zone of the lower chambers fixing cavities. The second ledge is attached to the second zone of the fixing cavities of the lower chamber. The antimagnetic ring is located between the calculating block and the upper chamber of the measuring block and is fixed against the body of the calculating mechanism with clamps. The clamps of the antimagnetic ring are made in the form of elastic straps made integrally with the body of the calculating block. At its peripheral part the clamp has a ledge directed to the body center, and is cinematically linked to the antimagnetic ring's bottom end. The body of the calculating block, in its lower part has a clamp of the measuring block's upper chamber that is made in the form of an elastic strap, manufactured integrally with the body of the calculating block. At its peripheral part, the clamp has a ledge directed to the body center, thus providing elastic cinematic connection with the corresponding ring ledge at the measuring block's upper chamber and enables mutual circular motion. The measuring block's upper chamber has al least one ledge locking the rotation, which has cinematic link to the corresponding vertical slot in the pipeline joining body. The meter includes two sealing rings, the first of which is installed between the pipeline joining body and the measuring block's upper chamber, and the second one installed between the bottom of the measuring block's lower chamber and the pipeline joining body. The first ring's section is smaller than the second ring's section. A sealing ring is located between the calculating block's body and measuring block's upper chamber, and has at least one slot on its internal surface. The calculating block's body has a ledge on its bottom end's surface and is cinematically linked with the relative slot of the sealing ring. The lid of the calculating block's body is transparent and is installed into the body hermetically, with a capability of rotating around an axis.

Due to the fact that the claimed water meter's elements performance resource differs, ranging from twenty or more years for the pipeline joining body, twelve years for the calculating block's gearwheels, and from three to six years for the measuring block's elements, it is appropriate to use a chunked (block at a time) approach to meter's servicing. The claimed construction of the water meter provides an opportunity to make adjustments and testing in the manufacturing process, checkup and repair in the operational process, not of the entire water meter, but rather its blocks (the calculating and the measuring blocks), and in case of a necessity a replacement of appropriate block's instead of withdrawn ones. This enables to lower labor costs and the maintenance and repair costs while increasing the operational reliability of the meter.

The constructive provision of the circular movement ability and fixation in a selected position of the grid with edges against the basket with holes for water passage in two zones with different steps, including the reasonably small step of one to two degrees, additionally allows a more precise adjustment of the water meter.

The invention is explained by following figures, which represent:

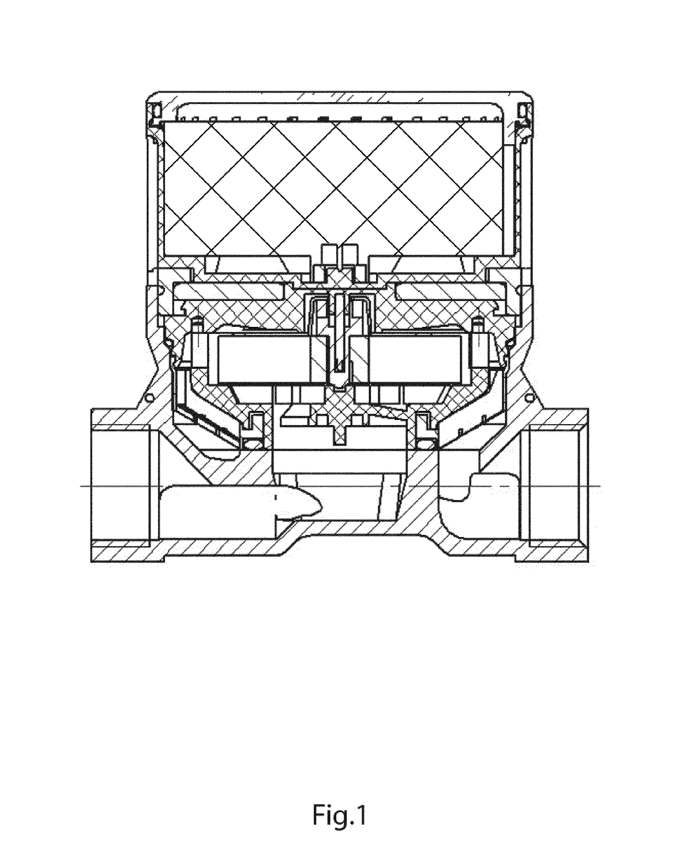

Figure 1 - general view of the water in longitudinal section

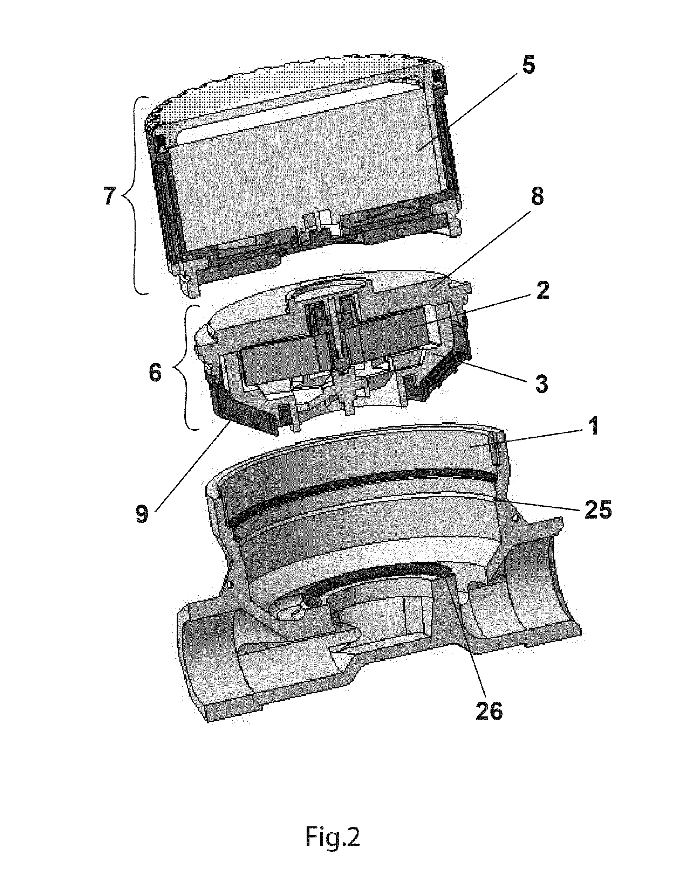

Figure 2 - perspective geometry; block by block water meter's depiction

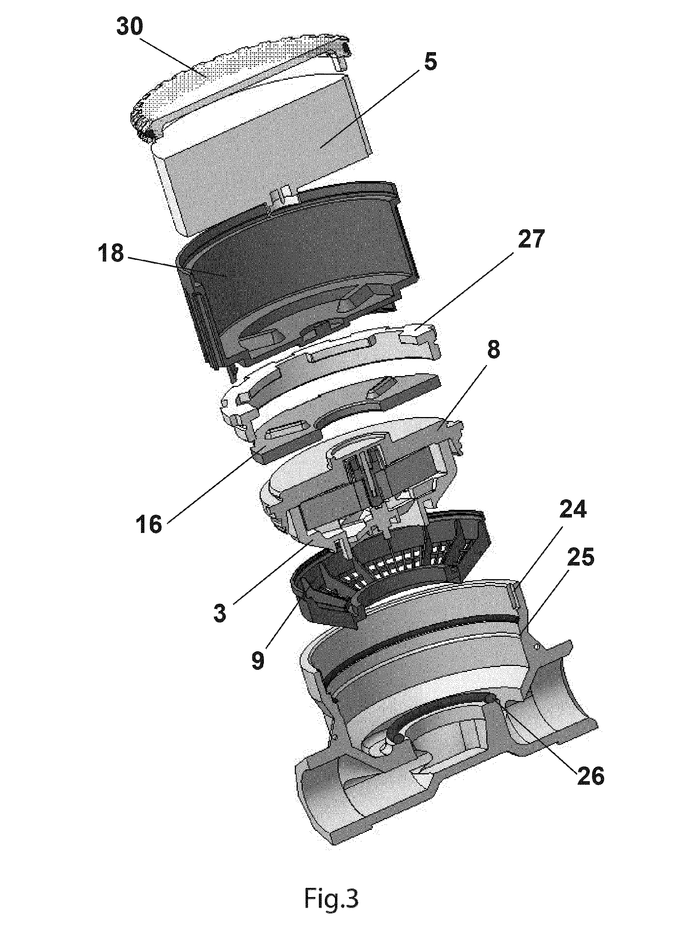

Figure 3 - perspective geometry; sectional element by element general view of the water meter

The multi-jet assembly process is done block by block. When assembling the calculating block 7, the calculating mechanism 5 is put into the body 18, and closed with a transparent cap 30. On the other side a sealing ring 27 is attached to the body 18. The antimagnetic ring 16 is attached to the body 18 in such a way, that it could be fixed by the clamps through the ledge (ledges). Herewith the sealing ring 27 is being attached to the calculating block of the body 18. After the assembling, the operability checkup is conducted.

The measuring block 6 is assembled as follows. The vane wheel 2 together with the axis and the magnet are installed into the basket 3 with holes 4 for water passage. This assemblage is closed atop by the upper chamber 8 and by the lower chamber 9 from below, and in such away so that the fixing ledges get into cinematic contact with the fixation zones.

The next step of the claimed water meter making is the adjustment and testing of the measuring block 6 at appropriate stands of the manufacturing plant. Herewith due to the lower chamber's 9 with edges 12 movement against the basket 3 with holes for water passage 4, such a position of the basket is chosen, so that the indications of the calculating mechanism meet the standards. After the adjustment process, the relative positions of the upper and lower chambers are recorded and a report is drawn up.

The meter assembling ends at the measuring block 6 being located inside and attached to the pipeline joining body 1. Next, the calculating block 7 is connected to the measuring block, by the means of tightening the sealing ring. Clamps cover the ledge of the measuring block's upper chamber 6.

The multi-jet water meter works as follows. The water volume that should be measured is pumped through the pipeline to the pipeline joining body 1, where it, by means of the grid 13 of the lower chamber 9 and profiled edges 12, splits into multiple jets and is directed through the holes 4 of the basket 3 to the vanes of the vane wheel 2. Thus the vane wheel rotation is executed. The calculating block's 7 calculating mechanism's 5 work is realized by means of magnetic coupling.

At the next checkup or repair after the discontinuation of water supply from the pipeline joining body 1 by unscrewing the sealing ring 27, the measuring 6 and calculating blocks 7, connected by the clamps 17 and 20, are extracted. The pipeline joining body 1 is not dismantled. Then, the blocks are disconnected. Afterwards, instead of the exhausted its resource or faulty block, an adjusted and tested on the manufacturing plant new block is installed. The assembly is made as described previously.

The duration of the replacement procedure of the above mentioned blocks doesn't exceed ten minutes. Therefore the labor costs, the cost checkup and repair works and operational expenses decrease. Installing new, previously checked and adjusted blocks increases the reliability and precision of the water meter's operation in total.

## Claims

1. Multi-jet water meter, which includes a pipeline joining body, a vane wheel installed on the axis of the basket, that has holes for water passage and is magnetically bound to the calculating mechanism, wherein the basket with the vane wheel(the axis and the magnet) is located in a separate block(measuring block) and its body consists of upper and lower chambers, the calculating mechanism is located in a separate block(calculating block), the measuring block is installed hermetically in the pipeline joining body and fixed in it, and the calculating block is made with a possibility of docking and fixating its body coaxially and with the ability of mutual rotation with the measuring block's upper chamber, which is connected to the measuring block's lower chamber with a possibility of its gradual rotation against the upper chamber and fixation in the required position, while radials and edges profiled along the radials are located on the internal surface of the lower chamber, lower chamber bottom is executed as a grid.

2. Multi-jet water meter of claim 1, wherein the lower chamber on its internal peripheral part has two zones with fixing cavities, i.e. triangular, while the angular step of the first zone amounts to one to two degrees, and the second zone is several times as large.

3. Multi-jet water meter of claim 1, wherein the external peripheral part of the measuring block's upper chamber has fixing ledges, the first of which is cinematically attached to the first zone of the lower chamber's fixing cavities and the second is attached respectively to the second zone of the lower chamber's fixing cavities.

4. Multi-jet water meter of claim 1, wherein the antimagnetic ring is located between the calculating block and the upper chamber of the measuring block and is fixed against the body of the calculating mechanism with clamps.

5. Multi-jet water meter of claim 4, wherein the clamp that fixes the antimagnetic ring is made in the form of an elastic strap manufactured integrally with the body of the calculating block, while at its peripheral part the clamp has a ledge directed to the body center, and is cinematically linked to the antimagnetic ring's bottom end.

6. Multi-jet water meter of claim 1, wherein the body of the calculating block, on its lower part has a clamp of the measuring block's upper chamber, that is in the form of an elastic strap, manufactured integrally with the body of the calculating block while, at its peripheral part, the clamp has a ledge directed to the body center, thus providing elastic cinematic connection with the corresponding ring ledge at the measuring block's upper chamber and enables mutual circular motion.

7. Multi-jet water meter of claim 1, wherein the measuring block's upper chamber has at least one ledge locking the rotation, which has cinematic link to the corresponding vertical slot in the pipeline joining body.

8. Multi-jet water meter of claim 1, wherein the meter includes two sealing rings, the first of which is installed between the pipeline joining body and the measuring block's upper chamber, and the second one installed between the bottom of the measuring block's lower chamber and the pipeline joining body, while the first ring's section is smaller than the second ring's section.

9. Multi-jet water meter of claim 1, wherein a sealing ring is located between the calculating block's body and measuring block's upper chamber, and has at least one slot on its internal part, while the calculating block's body has at least one ledge on its bottom end's surface and is cinematically linked with the relative slot of the sealing ring.

10. Multi-jet water meter of claim 1, wherein the lid of the calculating block's body is transparent and is installed into the body hermetically, with a capability of rotating around an axis.
